# EUROPEAN PATENT APPLICATION

(11) **EP 4 026 883 A1**
(43) Date of publication of application: **13.07.2022**
(21) Application number: 21150381.8
(22) Date of filing: 06.01.2021
(51) Int. Cl.: C09K 17/14, C09K 17/40, C05G 5/27

(54) **LIQUID SOIL AMENDMENT**

(71) Applicant: ESCUBE, s.r.o., 60200 Brno - Veveri (CZ)
(72) Inventor: Jancar, Josef, 62300 Brno (CZ); Abdellatif, Abdelmohsen, Dokki, Cairo 12622 (EG)
(74) Representative: Hartvichova, Katerina

(57) **Abstract**

The present invention provides a soil amendment comprising a suspension liquid comprising water, at least one hygroscopic component, at least one non-ionic surfactant, at least one water soluble germination accelerator, and optionally at least one organic soil fertilizer; the soil amendment further comprising at least one type of substance carrier containing at least one nutrient and/or bioactive component.

## Description

### Field of Art

The present invention relates to a liquid soil amendment providing controlled release of plant macro and micro nutrients, organic soil nutrients, other bioactive components and simultaneously improving moisture management in the soil by enhancing water infiltration, passively retaining water and actively reducing water evaporation from soil. The liquid soil amendment of the present invention applied by spraying or irrigation is useful in agricultural, horticultural, turf and grass maintenance, gardening, orchard and forestry applications.

### Background Art

Most commercial fertilizers, such as urea and mineral N-P-K fertilizers, dissolve quickly in water. Often, such fertilizers dissolve at a rate that exceeds the rate at which it can be used by plants. This can cause a number of significant problems. First, the excess fertilizer can leach into the ground water or surface water, where it can cause potentially serious environmental damage. In addition, excessive concentration of fertilizer in the vicinity of a plant may result in "burning off" plant roots. It is in general desirable that fertilizers and nutrients are released in a delayed or, more preferably, in a controlled manner.

In order to avoid the need for repeated applications, various slow or controlled release fertilizers have been developed in the form of polymer coated particles. For examples, see U.S.Pat.Nos. 4,042,366; 5,147,443; 5,435,821 and 6,231,633. These fertilizers can be applied at the beginning of the growing season and provide an initial high release of fertilizer followed by a slower, gradual release throughout the growing season. Slow or controlled release fertilizers are widely used on home lawns, public lawns, golf courses, home gardens, plant nurseries, and on horticultural crops, however, their use in agriculture is limited by their high price.

Polymer coated fertilizers are the most technically advanced controlled-release fertilizers. Different methods of manufacturing are utilized to produce polymer coated fertilizers. United States patent 5,538,531 or WO2002000573A2 and the prior art cited therein provide a useful overview of methods of conveying controlled release properties to a particulate plant nutrient. Specifically, US 5,538,531 teaches a controlled-release particulate fertilizer product having a water soluble fertilizer central mass encased in a plurality of water insoluble, abrasion resistant coatings. At least one inner coating is a urethane reaction product derived from isocyanates and polyols. The outer coating is formed from an organic wax having a drop melting point in the range from 50°C to 120°C.

Polymer coated controlled release fertilizers are typically produced by coating water insoluble semipermeable polymer layer onto the fertilizer particles or pellets. Over time, water diffuses through the coating, partially dissolves fertilizer particle and the dissolved fertilizer nutrients are released into the soil through diffusion from this semipermeable coating. One of the disadvantages in existing methods is that it is hard to control the thickness of the polymer that is applied onto the fertilizer and that uniform polymer coating thickness is difficult to achieve. Another disadvantage is that most of these manufacturing processes are batch type processes which are expensive. Yet another disadvantage with existing processes is that they require multiple applications of polymer to increase the thickness of the polymer coating around the fertilizer. It is also known in the art to pre-coat particulate plant nutrient with an organic wax or similar material as a means to regularize or otherwise improve the surface of the particulate plant nutrient prior to coating thereof with the urethane forming reagents. In an effort to reduce the amount of microplastics in the environment, increasing number of countries is limiting the use of plastics coatings in slow or controlled release fertilizers by requiering their biodegradability.

Micronutrient trace elements such as, for example, boron (B), iron (Fe), sulphur (S) and manganese (Mn), magnesium (Mg), zinc (Zn) or molybden (Mo) are known to be required for proper growth in all plants. These micronutrient trace elements, however, need to only be present in minute amounts to be effective. Moreover, such micronutrient trace elements should preferably be released to the soil and plants herein at a more rapid rate than other fertilizer materials such as macro-nutrients consisting of nitrogen (N), phosphorous (P), potassium (K) and the like. However, the current polymer coated fertilizer technologies do not provide the desired control over the release rate of individual nutrients during the vegetation cycle of the plant.

A growing number of countries throughout the world is characterized by an increasingly arid climate and deterioration of the soil quality due to extensive human activities. These soils have reduced water retention capability, require large amounts of water for irrigation purposes and exhibit large run offs during the periods of heavy rains. Soil additives in the form of superabsorbent polymers (SAP) enhancing water retention are useful in extending the period, in which water is available to plants. Superabsorbent polymers such as polyacrylamides, polyacrylates and other acrylic based polymers have been extensively investigated as a candidate for an efficient water absorbent for irrigation purposes. The slow absorption of water, incomplete release of absorbed water, slow biodegradation and high cost of SAPs are the challenges faced which limits the wider use of this materials in agriculture. They also affect to mobility of water soluble nutrients and their release to plants in a so far unknown way. Natural materials, such as wood chips and saw dust, are also used as soil amendments to increase the water storage capacity of sandy soils, however, water retention in wood is low.

In order to improve wettability of hydrophobic soil and enhance water infiltration, various wetting agents are utilized based on amphiphillic molecules reducing the contact angle at the water-soil contact. Use of wetting agents enhances infiltration of reain or irrigation water into soil and reduces surface runoffs. Water evaporation from soil is another mechanism causing loss of soil humidity. Various hygroscopic humectants capable of attracting water vapor and condensing it into liquid water are employed to increase the amount of water available to plant roots.

Despite advances in the coated fertilizer and water retention arts, there is still room for improvement. Specifically, it would be desirable to have a soil amendment and process for production thereof which would allow for the customization of release rate profiles of individual plant nutrients, microelements and other supporting and bioactive species. It would also be desirable to achieve such precisely controlled individualized release rate profiles of both plant and soil nutrients in a liquid soil amendment with release mechanisms performing in response to various external and/or internal stimuli. Such stimuli include but are not limited to the specific value of pH, relative humidity, temperature, specific microbial enzymes or controlled life span of materials carrying the nutrients. Eco-friendly soil amendments, combining controlled release of precise nutrient doses and other bioactive compounds with water retention, runoff and evaporation reduction are also desired for reducing the labor cost in intensive agriculture for effective food production and, at the same time, making the agriculture more environmentally friendly by reducing soil compaction, mitigating environmental damages by microplastics and overfertilization, limiting the use of water in agriculture and supporting production of bio-foods.

### Disclosure of the Invention

The invention relates to liquid soil amendment enhancing yield and/or nutrition quality of green mass of plants, enlarging root system, accelerating germination and nutrient uptake, improving vitality under both dry and wet conditions, while simultaneously improving water management in the soil and contributing to regeneration of soil quality. Applications targeted include but are not limited to growing green maize for feedstuff or silage as well as for renewable energy production, agriculture and ecofarming for bio-food, horticulture including vertical and other intensive vegetable growth technologies, orchards, forestry, city green and sport fields, specifically addressing environmental stress incurred by local climate and its changes, need for a more effective food production and reduction of harm caused by intensive agriculture to the environment. Targeted markets include but are not limited to: agriculture for non-irrigated crops; agriculture for irrigated crops (including but not limited to horticulture-based plants); arboriculture, forestry and gardening; golf courses; sport and park turf; seeding additive for plant nurseries; and fruits, among others. The methods and products described herein combine means for precisely controlled delivery of individual plant and soil nutrients, germination additives, plant protective agents and other bioactive substances with improved management of soil moisture.

The present invention provides a soil amendment in the form of a flowable blend comprising a blended suspension liquid and one or more nutrient and/or bioactive substance carriers. The structure of the amendment according to the invention allows simple application ensuring pre-programmed precise dosing of individual nutrients and bioactive compounds over the vegetation period of plants in response to external or internal chemical, biological, thermal or mechanical stimuli or due to an action of controlled life span substance carrier itself. The release profile is pre-programmed during manufacturing stage according to the need of the various stages of plant growth and can span the period from several days up to 24 months. The size, composition and content of the substance carriers can be tailored to provide time, dose and soil profile specific release of individual bioactive substances and plant macronutrients and/or micro-elements, soil nutrients and other bioactive substances. Another advantage is that the disclosed soil amendment is flowable and can be sprayed onto the soil or plants or used in irrigation or watering, thus allowing a precise and homogeneous covering. Still another advantage is that all the components of the disclosed soil amendment are hydrolytically or enzymatically biodegradable into environmentally benign or bacterially digestable residues.

The soil amendment of the present invention comprises a suspension liquid comprising water, at least one hygroscopic component, at least one non-ionic surfactant, at least one water soluble germination accelerator, and optionally at least one organic soil fertilizer, and the soil amendment further comprises at least one type of substance carrier containing at least one nutrient and/or bioactive component.

Preferably, the suspension liquid comprises 2-5 parts of water, 2-5 parts of hygroscopic component(s), 0.5-3 parts of non-ionic surfactant(s), 0.1-2 parts of germination accelerator, and optionally 0.1-2 parts of at least one organic soil fertilizer. The suspension liquid may also contain ammonia.

The hygroscopic component may be selected from the group comprising glycerol, hyaluronic acid, and alpha-hydroxy acids such as lactic acid and the like.

In some embodiments, the suspension liquid comprises lactic acid and glycerol as hygroscopic components.

In some embodiments, the suspension liquid comprises ammonia.

Suitable non-ionic surfactant may be selected from group of compounds including but not limited to dodecyl-polyglucoside, poloxamer, methyl hexaethylene glycol dodecanoate, glycerol monolaurate, glycerin triacetate, propylene glycol, ethyleneoxide-propylene oxide block copolymer, hexylene glycol, butylene glycol, aloe vera, molasses, polydextrose, sodium hexametaphosphate, sorbitol, xylitol, maltitol, non-ionic polyols like sucrose, triacetin, alkyl polyglycosides and the like.

In some embodiments, the suspension liquid comprises dodecyl-polyglucoside, poloxamer, methyl hexaethylene glycol dodecanoate and/or glycerol monolaurate as non-ionic surfactant.

In some embodiments, the suspension liquid comprises vermicompost leachate as germination accellerator.

In some embodiments, the suspension liquid contains kelp extract, seaweed extract, Ascophyllum nodosum extract, and/or humate complex as organic soil fertilizer.

In some embodiments, the suspension liquid contains water, hygroscopic components (preferably glycerol and lactic acid), surfactants, vermi compost leachate, humic acids and/or liquid seaweed extract.

The substance carrier type may be selected from organic substance carrier and inorganic substance carrier.

The organic substance carrier is preferably composed of a one or multicompartment organic microcontainer in the form of microgel, multicompartment block copolymer microparticle, vesicle, niosome or phytosome.

The organic substance carrier is preferably made of materials selected from the group of natural polymers polysaccharides and/or polysaccharide derivatives, polysaccharides hydrophobized by C10-C20 alkyl chains, cross-linked polysaccharides, proteins, cross-linked proteins, superabsorbent polymers such as potassium polyacrylate, amphiphillic molecules, block copolymers such as PLA/PEG block copolymers, and combinations of these materials.

The inorganic substance carrier is preferably composed of a porous or layered microparticle with large accessible internal surface such as zeolites, carboneous particles, halloysite nanotubes, and the like.

Herein, the soil amendment is a (low to medium viscosity) liquid mixture containing dispersion of one or more types of particulate matter capable of carrying and releasing nutrition, protective, germination and other bioactive agents having internal structure enabling to adjust the release profiles of the individual compounds to the growth stage of a specific type of plant or group of plants. The mixture contains a suspension liquid, and dispersed therein particulate substance carriers having internal structure enabling to adjust the release profiles of plant and soil nutrients, microelements, plant protective agents, bug and deer repellents, germination accelerators and other bioactive agents. The tuning of release profiles is achieved by adjusting the microcontainer composition, shape, size, size distribution, amountof the different types of carriers and the composition and physico-chemical properties of the suspension liquid. The nutrient and/or bioactive substance are attached to the carrier by labile chemical bonds, weak physical bonds or their combination selected to provide the desired kinetics of substance release for a given compound. Suspension fluid combines the delivery mechanisms of structured liquids with the simultaneous tuning of the bioactive compound release profile and enhanced soil water management, not attainable by any of the structured liquids. The soil amendment according to the present invention is in the form of a suspension liquid containing freely flowing individual substance carriers of at least one type, one size and prescribed amount.

The solutions of individual nutrients and/or bioactive substances may be enclosed in one or more carrier compartments and/or the nutrient and/or bioactive molecules may be attached directly to the carrier body by labile chemical bonds, weak physical bonds, their combination and/or selected to provide the desired release profile of a given compound. The fine-tuning of release profiles of individual compounds is achieved by selecting the mechanism of substance release controlled by the carrier morphology, molecular structure of its body, its overall composition, shape, size, size distribution. Blending of different types of carriers may further enrich the palette of release profiles.

The substance carriers include microgel particles and multicompartment microparticles, vesicles, bilayer and multi-layer vesicles with single or multiple inner compartments, niosomes, phytosomes, carboneous particles, zeolites, layered inorganic or organic microparticles, hydrogel or aerogel microparticles, grafted, branched, dendrimer or star shaped macromolecules. Preferably, the substance carriers may have dimensions ranging from 10 nanometers (dendrimer and star shaped macromolecules), preferably from 50 nm (vesicles, niosomes) or from 200 nm (phytosomes, transferosomes) to 90 000 nm (carboneous particles, zeolites, microgel particles, multicompartment microparticles), preferably up to 1000 nm.

The microgel substance carrier is prepared by contacting at least one gelling substance with at least one plant nutrient and/or bioactive substance in aqueous system, and subjecting the resulting mixture to a treatment resulting in enrichment of the gelling substance by the bioactive substance without losing its biological activity.

Substance carriers may be produced by, e.g., cross-linking, dendrimer formation, spray drying, emulsification, gellation or encapsulation.

A substance carrier in accordance with the invention may include an organic vesicle comprising a hollow compartment that encloses a water soluble content with 10-50 nm thick biodegradable or hydrolyzable single or multi-lamellar membrane. Vesicle offers considerable scope for tailoring release profile of the contained compound by changing its chemical structure, block lengths, stimulus-responsiveness and conjugation with biomolecules. Vesicles with controlled size may be prepared *via* the self-assembly of branched polymers in droplet templates or in multichannel microfluidic devices. Multilamellar vesicles present extended stability of the membrane and improved stability of substance entrapped, thus, enhancing the control over the substance release kinetics.

Vesicle carriers with multiple compartments enable simultaneous release of multiple ingredients which are separately encapsulated and stored without cross-contamination between incompatible ingredients. Microfluidic approach based on double-emulsion water/oil/water (W/O/W) drops may produce vesicles with multicompartment structure in a simple and facile manner. Microfluidic W/O/W double emulsion drops may serve as templates for the vesicles, the number of inner droplets can be precisely controlled through the flow rates of the phases involved. The multiple inner droplets adhering strongly with each other result in multicompartment polymersomes with the number of compartments fixed by the number of inner water drops. For example, by employing injection capillary with two bores, double-emulsion drops containing two different inner water drops can be prepared. The number of encapsulants can be further increased by using injection capillary with multi-bores for inner drops that contain different species.

Monodisperse vesicles may be prepared from templates of double-emulsion drops using capillary microfluidic devices, which in turn are encapsulated in the innermost drops of a second level of double-emulsion drops using another microfluidic device. This encapsulation process can be repeated in a third step of double emulsification to form triple vesicles consisting of a vesicle-in-vesicle-in-vesicle structure, further enhancing the flexibility of the subsequent controlled release profile. These multiple vesicle structures provide means for sequential and extended releases of multiple species encapsulated when they are exposed to specific chemical environment that induces dissociation or degradation of the bilayer membranes. In addition, modification of bilayer stability enables the programmed release of multiple active ingredients encapsulated.

If the outer membrane of the double vesicles bursts before the inner membranes do, species encapsulated in the outer compartment will be released before those encapsulated in the inner vesicular compartments. This enables sequential release of different active ingredients. If the inner membrane is destabilized before the outer membrane, internal mixing of ingredients within the intact outer membrane will take place before subsequent release to the surrounding environments following subsequent breakage of the outer membranes enabling reaction of the active ingredients before release.

Programing the release of multiple distinct components in desired patterns is then achieved by combinaing the two different structures, namely, multiple compartments in the same level and hierarchical compartments in different levels. The stepwise release in time of multiple components may also be achieved by multiple vesicles structure, where time gap between release steps can be tuned by manipulating the stability of the bilayers. These novel carrier structures create unprecedented opportunities to tailor the release profiles of actives for the desired applications.

Multi-compartment vesicles (polymersomes) offer a large variety of release mechanisms in response to specific external stimuli such as changes of temperature, pH as well as by oxidation/reduction and enzymes in a controlled manner. The membranes of vesicles are permeable to water and the direction at which water moves across vesicle membranes is typically governed by the osmotic pressure difference between the inside and the outside environment of the vesicles. The osmotic pressure, pₒₛₘ = cRT, is related to the concentration of solutes, where c is the molar concentration of the solutes, R is the gas constant and T is the temperature. When the osmolarity, which refers to the molarity of osmotic relevant molecules that cannot diffuse across membranes, is higher in the outside environment than in the core of the vesicles, water tends to get sucked out of the vesicles; when the osmolarity is higher in the vesicle core, water diffuses into the vesicles. The response of the vesicles to such water diffusion depends on the nature of the vesicle membranes. Therefore, osmotic pressure can be used as a trigger for inducing the release of actives from these vesicles. For membranes with a gel or glassy phase, the amphiphiles that form the membranes are frozen and immobile; therefore, the membranes are not easily deformed. Thus, the membrane cannot be swollen significantly and the membrane area cannot be increased beyond the threshold imposed by the constituent amphiphiles. As a result, when subjected to a sufficiently high swelling pressure, these membranes disintegrates and bursts, providing an osmotic approach for release of actives. Similarly, when the membranes are forced to shrink in area due to diffusion of water out of the vesicles, they have to buckle and at sufficiently large reduction of the volume of the vesicle core, cracks and pores form, leading to a release of actives.

Poly (lactic acid) and poly (caprolactone) are representative biodegradable bilayer materials due to hydrolysis of ester groups. The rate of degradation and time for release of actives are controllable through carefully selecting type and block length of degradable polymer or employing blends with nondegradable polymers. While non-enzymatic hydrolytic biodegradation of polyester blocks is usually slow taking place on a time scale of days to weeks, hydrolysis rates significantly increase in the presence of enzymes. Diblock copolymers with a polyester block such as poly(trimethylene carbonate)-b-poly (L-glutamic acid) (PTMC-b-PGA) degrade and release the encapsulated content within several hours when exposed to lipase enzymes. The degradation of the hydrophobic PTMC block, and thus respective polymersomes, is detectable by a decrease of scattering intensity using dynamic light scattering (DLS). Manipulation of PTMC-b-PGA-based polymersomes is also achieved by a change of pH, which triggers a response of the polymersome within minutes due to structure transitions of PGA.

Polymersomes that combine pH-sensitivity and thermo-sensitivity may include multi-responsive copolymers, such as double-hydrophilic poly[2-(dimethylamino)ethyl methacrylate]-bpoly(glutamic acid) (PDMAEMA-b-PGA). Thermal transition of vesicle building blocks can strongly affect self-assembly-and-degradation or perturb membrane permeability. In case of PDMAEMA-b-PGA, PDMAEMA shows LCST behavior and drives the vesicular self-assembly of the copolymer above a narrow temperature range at approximately 40 C. Thermally degradable copolymers based on N-isopropylacrylamide (NIPAAm) with a broad range of LCST ranging from 30 to 50 °C can be utilized for pH an temperature sensitive polymersomes. Reversible addition-fragmentation chain transfer (RAFT) polymerization enables the fabrication of thermo-sensitive vesicular building blocks with narrow polydispersity, and thus achieves sharp phase transitions.

The controlled degradation of polymersomes may also be achieved by utilizing oxidative and reductive stress, as commonly found in living tissue. These polymersomes can be fabricated from poly(propylene sulfide) (PPS) and poly-(ethylene glycol)PEG. Examples includes PEG-PSS-PEG where a disulfide (-S-S-) symmetrically divides the PSS block, as well as PEG-SS-PPS. these copolymers degrade due to formation of sulfones and sulfoxides from the thioether in the presence of oxidizing reagents such as hydrogen peroxide. For unilamellar vesicles, membrane proteins such as a-hemolysin can be incorporated for controlled release. This protein is attached to the bilayers and creates nanopores of approximately 2.6 nm in a diameter through the membrane due to their unique structure. Therefore, encapsulated ingredients, which have smaller size than 2.6 nm, can diffuse out through these nanopores, achieving sustained release until complete depletion of the ingredients.

A substance carrier in accordance with the invention may include an organic vesicle comprising a submicrometer diameter hollow sphere that encloses a water soluble content with 10-50 nm thick biodegradable or hydrolyzable membrane meade of multi-block copolymer. Vesicle offers considerable scope for tailoring release profile of the contained compound by changing its chemical structure, block lengths, stimulus-responsiveness and conjugation with biomolecules. In some embodiments, vesicles with controlled size may be formed prepared *via* the self-assembly of branched polymers in droplet templates. Multilamellar vesicles present more in vitro stability and improved stability of substance entrapped enhancing the control over the substance release kinetics.

In some embodiments, substance carriers in the form of non-ionic surfactant vesicles termed niosomes obtained on hydration of synthetic nonionic surfactants, with or without consolidation of their lipids can be used. Synthetic nonionic surfactants such as alkyl or dialkyl poly glycerol ether class, alkyl polyglycosides and the like when hydrated also give unilamellar niosomes.

In some embodiments, substance carriers in the form of highly deformable vesicles with multilamellar membrane termed transferosomes are suitable for rapid, controlled and targeted substance delivery through the leaves and root walls. Transferosome can accommodate compounds with wide range of water solubility. Due to its high deformability, it gives better penetration of intact carriers into plant cells. They are made of biocompatible and biodegradable components and have high entrapment efficiency.

The group of polysaccharides and/or polysaccharide derivatives comprises starch, starch derivatives (such as oxidized starch, carboxymethyl starch), chitin, chitosan, chitosan benzoate, cellulose, cellulose derivatives (such as oxidized cellulose, carboxymethylcellulose), carrageenan, alginate, gum karaya, arabic gum and the like. The polysaccharide and/or polysaccharide derivative carrier and/or superabsorbent is preferably cross-linked by treatment with an acid and/or heat treatment at temperatures from 20 to 150 °C. Furthermore, the polysaccharides and their derivatives may possess pesticidal properties which may further improve the action of the soil amendment.

The polysaccharide and/or polysaccharide derivatives preferably have a molecular weight of at least 200 kDa, more preferably 200 kDa to 2 MDa.

Chitosan or chitosan derivatives preferably have a degree of deacetylation of 50-95 %, molecular weight of at least 1 MDa, and concentration of 0.1-10 wt. % in the suspension liquid, preferably 0.1-5 wt. %.

Chitin preferably has a degree of deacetylation of 0-40 %, molecular weight of at least 0.5 MDa, or 0.5-1.5 MDa, and concentration of 0.5-10 wt. % in the suspension liquid.

Chitosan may be hydrophobically modified by substitution with C10-C20 alkyls.

Starch or starch derivatives preferably have molecular weight of 200 kDa to 1 MDa, more preferably 400-600 kDa, and concentration of 0.1-5 wt. % in the suspension liquid. Degree of substitution of the starch derivatives is preferably 0.1-0.9. An example of starch is carboxylated starch.

Cellulose or cellulose derivatives preferably have molecular weight of 200 kDa to 1 MDa, more preferably 250-900 kDa, and concentration of 0.1-5 wt. % in the suspension liquid. Degree of substitution of the cellulose derivatives is preferably 0.1-0.9. An example of cellulose derivative is carboxymethyl cellulose.

Starch and/or cellulose and/or starch derivatives and/or cellulose derivatives may be cross-linked by treatment with acid and/or heat treatment (20-150 °C).

Carrageenan, alginate, gum karaya and/or gum arabic preferably have the concentration of 0.1-5 wt. % in the suspension liquid.

In some embodiments, at least two polysaccharide and/or polysaccharide derivatives are used in a combination.

The polysaccharide and/or polysaccharide derivative may be used in combination with an acid, typically in a concentration of the acid up to 1 wt. %. The acid may be an inorganic or organic acid, including hydrochloric, acetic, lactic, gallic, formic, malic, propionic, succinic, citric or polycarboxylic acids.

The protein may be selected from the group of animal and plant, linear, branched, single or multi-chain polypeptides such as various types of collagen, denaturated collagen, gelatine, elastin, fibrin, gluten, wheat or soy proteins and the like.

Superabsorbent polymers are a class of polymeric materials that have the ability to absorb and retain a large amount of water and aqueous solutions. They are composed of three-dimensional polymeric networks that do not dissolve in water but swell considerably in aqueous medium. The synthetic superabsorbent polymers from the group of potasium polyacrylate polymers with various molecular weight are hydrophilic, non-toxic, biodegradable and biocompatible.

An example of a block polymer is PLA/PEG block copolymer (poly(lactic acid)/poly(ethylene glycol)). In order to allow dendrimer formation, the PLA/PEG block copolymer is end-capped with itaconic acid. Dendrimer formation or slight cross-linking may be achieved by application of blue light (wavelength of 430-490 nm).

The bioactive components include plant and soil nutrients, microelements, germination accelerators, and/or protective agents such as pesticides, herbicides, miticides and the like. Bioactive components are discussed below:
Germination accellerators may be selected from natural and synthetic germination accelerating and growth stimulating substances from the group of earthworm enzymes, auxins, gibberellins, cytokinins, microalgae, cyanobacteria, endo- and ecto-mycorrhizal fungi, rhizobacteria, vermi-compost extracts (vermicompost leachates), polyethylene glycol, triaconatol, indole butyric acid, thiamin (vitamin B1), C8 phenyl-substituted 2-azahypoxanthine, magnesium sulfate.

Mineral and organic nutrient substances provide basic macronutrients (N, P, K), as well as microelements (Mg, Mn, Fe, S, B, Cr, Zn) to plants. Organic soil fertilizers provide nutrients to soil microorganisms and enhance content of various humine substances improving the soil quality and texture. Mineral and organic nutrients may include urea, potassium nitrate, humate complex, humic acids, EDTA chelates of metals (Mg, Mn, Fe, Cr, Zn).

Seaweeds filtering sea water are rich supply of microelements such as but not limited to Mg, Mn, Fe, S, B, Cr, Zn and, as well as, some organic soil nutrients. The disclosed soil amendment utilizes preferably dry, gelled or natural seaweeds such as kelpkelp, extracts such as kelp extract, seaweed extract, kelp paste, Ascophyllum nodosum extract.

Pesticides are substances for controlling pests in general, including weeds. Pesticides include herbicides, insecticides, nematicides, molluscicides, piscicides, avicides, rodenticides, bactericides, insect repellents, animal repellents, antimicrobials and fungicides. An example of a pesticide used in the examples of this patent application are selenium nanoparticles, carbendazim, tebuconazol, tetradifon, iron ions, copper ions, triazine herbicides; sulfonylurea herbicides; uracils; urea herbicides; acetanilide herbicides; and organophosphonate herbicides such as glyphosate salts and esters.

Suitable fungicides include, for example, nitrilo oxime fungicides; imidazole fungicides; triazole fungicides; sulfenamide fungicides; dithio-carbamate fungicides; chloronated aromatic; and dichloro aniline fungicides.

Suitable insecticides include, for example, carbamate insecticides; organo thiophosphate insecticides; and perchlorinated organic insecticides such as methoxychlor.

Suitable miticides include, for example, propynyl sulfite; triazapentadiene miticides; chlorinated aromatic miticides such as tetradifan; and dinitrophenol miticides such as binapacryl.

The bioactive components may be used in combination, or one substance may have a multitude of effects. Such substance is for example vermi enzyme which is a pesticide and a micronutrient.

Optionally, the suspension liquid further contains non-ionic wetting agents such as decyl-glucoside or propanediol. The concentration of these wetting agents may be, for example, 0.2-20 wt.% in the suspension liquid.

Optionally, the suspension liquid or the substance carriers further contain at least one superabsorbent polymer, in particular polyacrylate or polyacrylate salt such as potassium polyacrylate. Their concentration may be, for example, 0.1-1 wt. % in the suspension liquid or in the substance carriers.

Saponins of plant source exhibit antifungicide effects which may provide protection of plants against fungi when needed.

The amount of the substance carriers in the suspension liquid may be, for example, in the ratio of 0.5 g to 100 g per 1 liter, preferably 1 to 50 g per 1 liter, more preferably 5 to 20 g per 1 liter.

In one aspect, the present invention provides a method of increasing size of the root system and the yield of green mass of plants by a method comprising of spraying the flowable soil amendment of the present invention onto a target soil area and its natural penetration into the soil profile. In some embodiments, the penetration depth is 30 centimeters from the top, in other embodiments, penetration equals to about 20 cm, in other embodiments penetration from the soil top is less than or equal to about 15 cm or equal to about 10 cm in other embodiments, or less than or equal to about 5 cm in other embodiments. In any embodiment, the soil amendment does not form any layer, membrane or crust on the top of the soil.

In another aspect, described herein are methods for improving germination rates of a plant or crop, by contacting or soaking a plant seed or tree seedling roots in the flowable soil amendment of the invention. In some embodiments, the soaking period lasts for 24 hours, in another embodiment is lasts 12 hours and in another embodiment it lasts 2 hours and still in another embodiment it lasts 1 hour or less. A further embodiment includes the additional step of contacting a seed onto or within the soil. Method described can further include contacting a seed into or within the target soil area. In one embodiment, the seed is positioned at a depth of less than 1 mm from the soil surface. In another embodiment, the seed is positioned at a depth of less than 2 mm from the soil surface. In another embodiment, the seed is positioned at a depth of less than 4 mm from the soil surface. In yet another embodiment, the seed is positioned at a depth of less than 5 mm from the soil surface. In yet another embodiment, the seed is positioned at a depth of less than 7 mm from the soil surface. In one embodiment, the seed used in the methods described herein fall into one of three categories: (1) ornamental (such as roses, tulips, etc.), grasses and non-crop seed; (2) broad crop and cereal seeds and (3) horticulture and vegetable seeds and (4) tree seedlings of fruit and forest trees.

The method of applying the flowable soil amendment to the target soil area is through casting or spraying. Some techniques may be similar to common fertilizer application techniques, using low or high-volume sprayers. In one embodiment, the step of contacting the top layer of soil can take the form of spraying a water diluted soil amendment onto the soil. In one embodiment, a water diluted soil amendment is sprayed onto a target area of soil at a rate of, or at a rate equivalent to less than 20 1 soil amendment per hectare. In another embodiment, a water diluted soil amendment is sprayed onto a target area of soil at a rate of or at a rate equivalent to less than 10 liters of soil amendment per hectare. In yet another embodiment, the water diluted soil amendment is sprayed onto a target area of soil at a rate of, or at a rate equivalent to, less than about 3 1 soil amendment per hectare.

Typically, the liquid soil amendments are mixed with water at a concentration of equal or less than 2 vol. %. In some embodiments, the liquid soil amendments are mixed with water at a concentration of less than 1 vol. %. In some embodiments, the liquid soil amendments are mixed with water at a concentration of less than 0.5 vol. %. In some embodiments, the liquid soil amendments are mixed with water at a concentration of less than 0.4 vol. %. In some embodiments, the liquid soil amendments are mixed with water at a concentration of less than 0.3 vol. %. In other embodiments, the liquid soil amendments are mixed with water at a concentration of less than 0.1 vol. %. Yet, in another embodiment the liquid soil amendments are mixed with water at a concentration of less than 0.05 vol. %. The aqueous mixture of the liquid soil amendment of this invention is generally sprayed onto the target soil area prior to seeding, immediatelly after seeding, onto germinated soots after they emerge or onto leaves when needed. Irrigation pumps, spray booms and the like may be used, but any method generally known for applying a liquid or spray onto agricultural land may be employed.

### Examples of carrying out the Invention

### Example 1:

Two liters of the suspension liquid for the liquid soil amendment for golf fairway revitalization and maintenance was prepared by blending 3 parts of fresh water, 1 part of lactic acid, 1 part of glycerol, 0.2 parts of 25% water solution of ammonia, 1 part of dodecyl-polyglucoside and 1.2 parts of vermi compost leachate. The suspension liquid possessed the pH=6.5.

One liter of aqueous suspension containing a microgel carrying urea was produced. The microgel was prepared using 2 wt. % of chitosan with the degree of de-acetylation of 85 % and molecular weight equal to 1 MDa as determined by the GPC. Chitosan was dissolved in 1 % aqueous acid medium of hydrochloric acid for 4 hours at room temperature (20 ± 5) °C. The nitrogen (N) source in the form of water soluble urea in the amount of 40 wt.% was added to obtain a homogeneous and well flowing colloidal suspension containing chitosan microgel carriers containing 18 wt. % of urea as determined by FTIR analysis. Release profile of N into water were determined employing UV-VIS and FTIR spectrometers. Release profile of N into soil was determined using bacterial digestion test with analysis of bacteria produced CO₂.

Suspension liquid and aqueous suspension of microgel carriers were mixed in 2:1 ratio in an enameled reactor at 60 rpm and 30 °C for 1 hour. The prepared soil amendment was further diluted with fresh water in the 1:200 volume ratio and sprayed with a tractor held 700 liter spray boom at a fairway of the 18-hole golf course and with a knapsack sprayer at the ornamental lawn near the golf club office building. Over the 3 summer months from July to September, no irrigation was used on the treated grass. The treated turf and lawn maintained significantly better grass quality (leaf density, green color) and vitality compared to the untreated turf (dry spots, yellow leaves), while substantially reducing the leaching out of the fertilizing agents used traditionally. By eliminating the need for irrigating the fairways and the lawn, the overall use of irrigation water by the golf course was reduced by over 30%.

### Example 2:

Sixteen liters of liquid soil amendment for damaged grassland revitalization was prepared. The suspension liquid was produced by blending 3 parts of fresh water, 1 part of lactic acid, 1 part of glycerol, 0.2 parts of 25% water solution of ammonia, 1 part of dodecyl-polyglucoside and 1.2 parts of vermi compost leachate and 0.2 parts of liquid kelp extract. The suspension liquid possessed the pH=6.2. In a separate step, a micro-gel substance carrier was prepared from mixtures of 5 wt% ithaconic acid end-capped PLA/PEG block copolymer, 20 wt% KNO₃ and 5 wt% processed kelp paste containing traces of microelements (Fe, Mg, Zn, B) in 2 liters of fresh water. After vigorous mixing, temperature was adjusted to obtain spinodal decomposition of the mixture at temperature 30 °C. Microgel formation under constant temperature and mixing rate resulted in approximately uniformly sized PLA/PEG microgel particles with dendritic molecular structure, as determined by cryo TEM, containing physically bound K, N, as determined by EDAX utilizing freeze dried specimens and kelp containing the micronutrients, as determined using plasma bound ICP. The size of the microgel carriers formed upon the spinodal decomposition was decreasing with the increasing stirring rate. To obtain stable microgel carriers of the average size less than 1 micrometer, the suspension was mixed at 100 rpm and stabilized by irradiation with a visible blue light with the wavelength of 460 nm 15 to 30 seconds causing formation of covalent bonds between adjacent vinyl groups of itaconic acid end caps.

Four liters of aqueous microgel suspension were mixed with 16 liters of the suspension liquid. The prepared soil amendment was further diluted by fresh water in 1:100 ratio in a 2000 liter spray boom and sprayed onto the 3 ha pasture in mid-April. No irrigation was used. The treated pasture grew significantly more of the green mass. In June, the grass was cut for hey before using the pasture for horse grazing. The amount of produced hey bales increased by almost 65% compared to the neighboring untreted grassland. Moreover, the pasture for horses lasted a month longer than without the treatment with soil amendment of this invention.

### Example 3:

20 liters of the liquid soil amendment for the maintenance of ornamental city turf composed of a mixture of grasses was prepared. Eighteen liters of suspension liquid was produced by blending 3 parts of fresh water, 2 parts of lactic acid, 2 parts of glycerol, 0.8 parts of 25% water solution of ammonia, 1 part of dodecyl-polyglucoside, 0.1 parts of liquid seaweed extract and 1 part of vermi compost leachate yielding macroscopically homogeneous, well flowing transport suspension liquid with the pH=6.1.

In a separate step, a micro-gel substance carrier was prepared from mixture of 40 wt% carboxylated corn starch, 7.5 wt% potassium polyacrylate, 2.5 wt% microground zeolite, 45 wt% of water soluble KNO₃, 5 wt% of processed kelp paste containing traces of Se, Mg, B, Fe in 2 liters of fresh water. After mixing at 80 rpm at 30 °C, mixing rate was reduced to 30 rpm and temperature was increased to 85 °C to remove excess of water. The obtained viscous slurry was processed into micro-carriers employing spray drying proces in which the slurry is sprayed into a heated chambre to form small stable gelled droplets which are then collected by a cyclone collector. The size of the microgel carriers formed upon the spray drying decreased with the spray nozzle feeding rate and decrease of the slurry viscosity approximately linearly within the interval of feeding rates tested at a constant drying chambre temperature a feeding nozzle diameter. Microgel carriers with approximately spherical shape and diameter ranging from 200 to 1200 nm were obtained. Release profiles of N and K into water were determined employing UV-VIS and FTIR spectrometers. Release profile of N into soil was determined using bacterial digestion test with analysis of bacteria produced CO₂.

Half a kilogram of the micro carriers was dispersed in 2 liters of fresh water and the slurry was blended with 18 liters of the suspension liquid. The prepared soil amendment was further diluted by fresh water in 1:100 ratio. Then, 500 liters of diluted soil amendment were placed in a tractor held spray boom and sprayed onto the park and city greens. Over the 3 summer months, no watering or irrigation was used. The treated ornamental turf remained green throughout the summer and maintained grass density, compared to the untreated grass exhibiting dry spots, yellow leaves under the same conditions. To achieve the same quality of the reference turf, the park grass had to be irrigated regularly. This can reduce the amount of irrigation water used for ornamental city green maintenence by 30-40 % and also reduce the labor costs associated with mobile irrigation or watering.

### Example 4:

A liquid soil amendment for enhancing the amount of green mass in maize (*Zea mays*) intended for silage or energy generation. One hundred fifty liters of the suspension liquid was produced by blending 3 parts of fresh water, 2 parts of lactic acid, 1 part of glycerol, 0.3 parts of 25% water solution of ammonia, 1 part of dodecyl-polyglucoside and 1 part of vermi compost leachate and 0.5 parts of *Ascophyllum nodosum* extract. The suspension liquid possessed the pH=6.2.

The micro-gel substance carrier particles were prepared from the admixture containing 40 wt% carboxymethyl cellulose, 15 wt% gelatine, 1.5 wt% microground zeolite, 40 wt% of water soluble urea and 3.5 wt% of processed kelp powder. Total of 10 kg of the components listed above was gradually introduced into 20 liters of fresh water at 30 °C and the mixing rate of 80 rpm to obtain high viscosity matter. After mixing at 80 rpm at 30 °C for 1 hour, the slurry was diluted by adding 10 liters of fresh water, mixing rate was reduced to 30 rpm and temperature was increased to 90 °C. The microsphere carriers were obtained by emulsifying the mixed slurry in the presence of citrate ions and gluteralaldehyde. By using a process combining micro-emulsification and thermally induced phase separation, 50 µm in diameter microspheres were prepared with a highly porous structure. The microcarriers with large internal surface area showed enhanced urea retention ability and good dispersion in aqueous medium. Release profiles of N and P into water were determined employing UV-VIS and FTIR spectrometers. Release profile of N into soil was determined using bacterial digestion test with analysis of bacteria produced CO₂. Soil microbial populations, determined by soil phospholipid fatty acid (PLFA) analysis, found that the treatments applied did not cause a shift in microbial populations between fungi and bacteria, or gram-positive and gram-negative bacteria and elevated all soil microbial populations tested at the end of the experiment, indicating a desirable improvement in soil health.

Then, 15 liters of the prepared emulsion containing approximately 30 vol.% of the microparticle carriers were blended with 150 liters of the suspension liquid. The prepared soil amendment was further diluted by fresh water in 1:70 ratio. Then, the diluted soil amendment was placed in a 14,000 liters spray boom and sprayed onto maize with 5 leaves at a dose of approximately 250 l/ha. The neigboring field of a similar size with the same type of maize remained untreated. The seeding technique used at both fields was "under the heel", i. e., inserting corn seeds and urea fertilizer beads underneath the seeds at the same time. Upon harvesting, the amount of green maize from the field treated with the soil amendment was 40 % greater compared to the regularly treated maize, increasing the average amount from from 42 tons/ha to 59 tons/ha.

### Example 5:

A liquid soil amendment was prepared for phytotron experiment with poppy seed plants (*Papaver somniferum*) under controlled dry and wet conditions. Two liters of the suspension liquid was produced by blending 3 parts of fresh water, 1 part of lactic acid, 2 parts of glycerol, 0.05 parts of 25% water solution of ammonia, 1 part of nonionic surfactant under the trade name Poloxamer 188, Surfactant (Spectrum Chemical Mfg. Corp., USA), 0,1 parts of vermi compost leachate and 0.1 parts of liquid kelp extract. The suspension liquid possessed the pH=6.2.

Porous carriers were prepared by spray-drying the mixture of the KNO₃ loaded halloysite nanotubes (HNTs) and gelatin. Gelatine solution (10 wt%) was prepared by dissolving gelatine in water at 60 °C for 1 h. Two wt. % of HNTs per gelatine content were added into the gelatine solution. The KNO₃ loaded HNT dispersion was mixed with gelatine solution under stirring at 80 rpm at 60 °C for 2 h. Then, 2% genipin solution as crosslinking agent was added and allowed to age for half an hour at 60 °C. The HNTs/gelatine colloidal suspension was spray dried with a portable spray drier. Compressed air with variable pressure (1-5 bars) ran a rotary atomizer located above the dryer with a drying air flow rate of 100 kg/h. The inlet temperature was fixed at 110°C, the outlet temperature was about 60°C. Spray dried particles were collected with a 6-inch cyclone. The N, P and K release profiles was determined using a Perkin Elmer LAMBDA 850 UV/VIS spectrophotometer. Five samples were measured for each species to check the reproducibility. The kinetics of the nutrient release was determined by fitting the release profiles to the following theoretical models: Higuchi model: fₜ = K_{H}t^{0.5} where K_{H} is the Higuchi release constant and the Korsmeyer-Peppas model: fₜ = Ktⁿ, where K is a kinetic constant and n is an exponent that characterizes the mechanism. The carriers showed porous structure and excellent biocompatibility. The mechanical properties of the obtained composite carriers were enhanced significantly by HNTs, comparing to those made of neat gelatin. The NPK loaded HNTs bound by gellatine allowed extended nutrient release over 160 h, comparing to 8 h when in the neat gelatine carrier.

The effects of the soil amendment formed by dispersing 10 wt.% of composite carriers in 2 liters of suspension liquid were investigated by using them with the poppy seed culture in a phytotrone simulating dry (30% regular rainfall) and normal (100% regular rainfall) conditions and Central European temperature profile. Two applications of the amendment diluted with fresh water in the 1:50 wt/wt ratio were used. First application was immediately after seeding and the second was onto shoots with the first emerging leaf. Individual plant size, vitality, size of the root system and the size of poppy seed head at 60 days were evaluated. Total of 10 pots, 5 plants each were tested for treated and untreated specimens. Common fertilization scheme was used for the untreated plants used as the reference. Compared to the reference, in average, the plant size increased by 63%, the root size increased by 69%, vitality by 60% and the volume of the poppy seed head by 48%. Soil microbial populations, determined by soil phospholipid fatty acid (PLFA) analysis, found that none of the treatments applied caused a shift in microbial populations between fungi and bacteria, or gram-positive and gram-negative bacteria.

### Example 6:

A liquid soil amendment was prepared for small footage (10 m x 10 m) field experiment with grass (*Lolium perenne*)*.* The suspension liquid was produced by blending 3.5 liters of fresh water, 2.3 liters of lactic acid, 1.1 liters of glycerol, 0.9 liters of 25% water solution of ammonia, 1.1 liters of methyl hexaethylene glycol dodecanoate, 1.1 liters of vermi compost leachate and 0.3 liters of *Ascophyllum nodosum* extract. The suspension liquid possessed the pH=6.1.

Since the lamellarity of vesicles determines permeability of compounds through the vesicle membrane, only bilayer vesicles were prepared for this experiment. Single compartment vesicle carriers with bilayer membranes were prepared from hydroxyethylated cyclodextrin in water in the presence of low to medium molecular weight (2000 - 8000) ethylene-oxide/propylene-oxide block copolymer. Vesicles loaded with the urea solution were prepared utilizing the W/O microfluidic proces in a multichannel device with hydrodynamic flow focusing. The prepared vesicles exhibited the average diameter of 270 nm as determined by the image analysis of the micrographs taken using the cryo-SEM. The volume of one centimeter in diameter spherical particle contains approximately 10¹⁴ of 270 nm in diameter vesicles enabling their penetration between much larger soil particles in the flow of the suspension liquid. Moreover, their fourteen orders of magnitude larger number compared to the state of the art CRF particles unprecedently enhances the area of contact with the plant's fine roots compared to the state of the art controlled release fertilizers produced by the coating technologies.

The effects of the soil amendment containing single compartment vesicles were investigated in the experiments utilizing grass (*Lolium perenne*) over the period from April to October. The 0.2 1 of the prepared 10 wt. % vesicle suspension in fresh water with pH = 7 was mixed with 2 liters of the suspension liquid and stirred manually for 5 minutes. Then, the soil amendment was diluted with fresh water in the 1:100 volume ratio. Three small footage test fields were prepred and seeded with the *Lolium perenne* grass at the end of March in the Central European climate. The first field served as a reference and was treted according to the seed supplier's recommendations with a common liquid grass fertilizer in mid-May. The second field was treated with the 250 l/ha dose of soil amendment immediately after seeding and the second 250 l/ha dose was applied in mid-May. The third filed was treated with the 250 l/ha dose of soil amendment immediately after seeding followed by monthly treatment with the 250 l/ha dose of the soil amendment diluted with fresh water in the 1:200 volume ratio from mid-May to mid-October. The germination rate was determined subjectively as the time for the appearance of the first green leaf above the ground on at least ¾ of the field area. Amount of dry mass, root size, vitality index and nutrient content (N, P, K, Ca, Mn) were measured in mid-July and again in mid-August using standartized test procedures. Data obtained for the fields two and three were related to the date from the reference field.

The fields treated with the soil amendment exhibited 44 % shorter time for the first leaf emergence compared to the reference field suggesting greatly accelerated germination with no significant difference between the field 2 and 3. The amount of dry mass at the first harvest in mid-July was greater by 41 % and 56 %, respectively, for the field 2 and 3, respectively, compared to the reference. The amount of dry mass at the second harvest in mid-August was greater by 53 % and 71 %, respectively, for the field 2 and 3, respectively, compared to the reference. Root size for the treated grass was 45 % larger compared to the reference for both treated fileds 2 and 3 with no significant difference between them in mid-July. In mid-August, the root size of the grass in the field 3 increased by another 10 % with no significant change in the field 2. Slight reduction of the root size was obtained for the reference field. The amount of nutrients in the grass from the first harvest in mid-July increased by 30 % (N, P), 25 % (K), 18 % (Mn) and 14 % (Ca) compared to the reference. The amount of nutrients in the grass from the second harvest in mid-August increased by 60 % (N), 21 % (P, K), 25 % (Mn) and 22 % (Ca) compared to the reference. Plant vitality determined from the strength of the green color of leaves in mid-August was 58 % greater for the treated fields compared to the reference field. Soil microbial populations, determined by soil phospholipid fatty acid (PLFA) analysis, found that the treatments applied did not cause a shift in microbial populations between fungi and bacteria, or gram-positive and gram-negative bacteria and elevated all soil microbial populations tested at the end of the experiment, indicating a desirable improvement in soil health.

### Example 7:

A liquid soil amendment was prepared for small footage (10 m x 10 m) field experiment with creeping bentgrass *(Agrostis stolonifera L.*). Effect of the controlled release of biostimulants on the dry mass, vitality, root size and nutrient content was investigated. The suspension liquid was produced by blending 3.5 liters of fresh water, 2.3 liters of lactic acid, 1.1 liters of glycerol, 0.9 liters of 25 % water solution of ammonia, 1.1 liters of glycerol monolaurate (C₁₅H₃₀O₄) with acidifier, 1.1 liters of vermi compost leachate and 0.3 liters of norwegian *Ascophyllum nodosum* extract. The dry weight of the extract contained 19 wt. % of alginic acid, 7 wt. % of laminaran, 6 wt. % of flucoidan, 10 wt. % of other carbohydrates, 9 wt. % of proteins, 3 wt. % of fats and 46 wt. % of N-free carbohydrates. The suspension liquid possessed the pH=5.8.

Vesicle carriers with multiple compartments were prepared for a simultaneous release of different ingredients which are separately encapsulated and stored without cross-contamination. Microfluidic approach based on double-emulsion drops was used to produce multicompartment vesicles in a simple and facile manner. Using microfluidic O/W/O double emulsion drops as templates for the vesicles, the number of inner droplets was precisely controlled through the flow rates of the phases involved. By choosing an amphiphile-containing water phase as the middle phase of the double emulsions, vesicles were formed through dewetting and subsequent separation of the dewetted water drops. In addition, the multiple inner droplets also adhered strongly with each other resulting in multicompartment polymersomes with a constant number of compartments fixed by the number of inner oil drops. Microfluidic device employing injection capillary with two bores produced double-emulsion drops containing two different inner water drops. Using capillary microfluidic device, monodisperse vesicles were prepared from templates of double-emulsion drops encapsulated in the innermost drops of a second level of double-emulsion drops using another microfluidic device.

Here, liquid *humin complex* from leonardite (100 g/l of humin complex contains 3.2 g/l of N, 7.7 g/l of P (P₂O₅), 22.6 g/l of K (K₂O)) was encapsulated in the inner compartment and the liquid nitrogen fertilizer DAM 390 (39 vol. % of N, ¼ as NH₄, ¼ as NO₃ and ½ as NH₂) was encapsulated in the outer compartment. Modifications of the hydrophobic chitosan bilayer stability enabled the programmed release of different active ingredients encapsulated. The hydrophobic chitosan membranes of the prepared vesicles were permeable to water and the direction, at which water moves across vesicle membranes, is typically governed by the osmotic pressure (pₒₛₘ = cRT) difference between the inside and the outside environment of the vesicles (c is the molar concentration of the solutes, R is the gas constant and T is the temperature). The longer the hydrophobic side chains on chitosan, the greater membrane stability. In this experiment, chitosan grafted with oleoyl (C₁₈) side chains was used for the membranes of the inner vesicle compartments while chitosan grafted with n-dodecane (C₁₂) side chains was used for the outermost membrane, both with the grafting density of approximately 67 % as determined. The gel outer membrane of the double vesicles bursts before the inner membranes do, nitrogen fertilizer encapsulated in the outer compartment is released before the *humine complex* encapsulated in the inner compartments. This enables sequential release of plant nutrients and biostimulants in the form of nitrogen fertilizer-humin complex mixture in a pre-programmed pattern determined by the preparation protocol.

**Table 7.1 Result of the tests shown in % relative to the reference Field 1, hence, the results for Field 1 are always equal to 100%.**

| | **Field 1** | **Field 1** | **Field 2** | **Field 2** | **Field 3** | **Field 3** |
|---|---|---|---|---|---|---|
| | **1^{st} harvest** | **2^{nd} harvest** | **1^{st} harvest** | **2^{nd} harvest** | **1^{st} harvest** | **2^{nd} harvest** |
| **Dry mass** | 100 | 100 | 141 | 153 | 156 | 171 |
| **N** | 100 | 100 | 125 | 150 | 130 | 160 |
| **P** | 100 | 100 | 125 | 122 | 130 | 125 |
| **K** | 100 | 100 | 120 | 122 | 125 | 125 |
| **Mn** | 100 | 100 | 115 | 120 | 118 | 125 |
| **Ca** | 100 | 100 | 111 | 118 | 114 | 122 |
| **saccharides** | 100 | 100 | 121 | 130 | 128 | 135 |
| **Vitality index** | 100 | 100 | 118 | 120 | 120 | 121 |
| **Root size** | 100 | 100 | 145 | 145 | 145 | 157 |
| **Chlorophyll content** | 100 | 100 | 155 | 150 | 148 | 140 |
| **Germination rate** | 100 | 100 | 147 | NA | 147 | NA |

The effects of the soil amendment containing three compartment vesicles were investigated in the experiments utilizing creeping bentgrass (*Agrostis stolonifera L.*) over the period from April to October. The 0.2 1 of the prepared 10 wt. % vesicle suspension in fresh water with pH = 7 was mixed with 2 liters of the suspension liquid and stirred manually for 5 minuts. Then, the soil amendment was diluted with fresh water in the 1:100 volume ratio. Three small footage (10 m x 10 m) test fields were prepred and seeded with the *Agrostis stolonifera L.* grass at the end of March in the Central European climate. The first field served as a reference and was treted according to the seed supplier's recommendations with a common liquid grass fertilizer in mid-May. The second field was treated with the 250 l/ha dose of soil amendment immediately after seeding and the second 250 l/ha dose was applied in mid-May. The third field was treated with the 250 l/ha dose of soil amendment immediately after seeding followed by monthly treatment with the 250 l/ha dose of the soil amendment diluted with fresh water in the 1:200 volume ratio from mid-May to mid-October. The germination rate was determined subjectively as the time for the appearance of the first green leaf above the ground on at least ¾ of the field area. Amount of dry mass, root size, vitality index, nutrient content (N, P, K, Ca, Mn, saccharide content) and photosynthesis effectivity were measured in mid-July and again in mid-August using standartized test procedures. Data in the Table 7.1 were obtained for the fields two and three and were related to the data from the reference field. Soil microbial populations, determined by soil phospholipid fatty acid (PLFA) analysis, found that the treatments applied did not cause a shift in microbial populations between fungi and bacteria, or gram-positive and gram-negative bacteria and elevated all soil microbial populations tested at the end of the experiment, indicating a desirable improvement in soil health. Soil microbial populations, determined by soil phospholipid fatty acid (PLFA) analysis, found that the treatments caused no shift in microbial populations between fungi and bacteria, or gram-positive and gram-negative bacteria and elevated all soil microbial populations tested at the end of the experiment, indicating a desirable improvement in soil health.

### Example 8:

Effect of the controlled release of biostimulants from the liquid soil amendment on the size, vitality, root size and photosynthesis efficacy was investigated for maize (*Zea mays)* in pot experiments carried out in a phytotron with controlled temperature, humidity, irrigation and sunshine intensity. The suspension liquid was produced by blending 350 ml of fresh water, 230 mililiters of lactic acid, 110 mililiters of glycerol, 90 mililiters of 25 % water solution of ammonia, 110 mililiters of glycerol monolaurate (C₁₅H₃₀O₄) with acidifier, 110 mililiters of vermi compost leachate, 20 ml of the *humate complex* (100 g/l of humic acid extract from leonardit, 3.2 g/l of N, 7.68 g/l of P (P₂O₅), 22.6 g/l of K (K₂O)) and 30 mililiters of *Ascophyllum nodosum* extract. The suspension liquid possessed the pH=6.5. Using capillary microfluidic device, monodisperse multicompartment vesicles were prepared from templates of double-emulsion drops encapsulated in the innermost drops of a second level of double-emulsion drops using another microfluidic device. Microfluidic device employing injection capillary with four bores produced double-emulsion drops containing four different inner water drops. The hydrophobically modified chitosan outer vesicle membranes were prepared from chitosan grafted with C₁₈ side chains with the grafting density of approximately 82 %. The chitosan grafted with C₁₂ side chains was used for the inner compartments membranes. The inner membrane of the four compartment vesicles bursts before the outer membrane does, the urea encapsulated in the outer compartment is mixed with the Fe in the EDTA chelate contained in two of the inner compartments and with the Mg and S encapsulated in another two inner compartments. This enables transport of plant nutrients and microelements to the soil profile containing maize seeds and pre-program the time for releasing the mixture for use by seedlings roots.

The effects of the soil amendment containing equal amounts of four compartment vesicles and hydrogel microparticles in the suspension liquid were investigated in the experiments utilizing maize (*Zea mays)* over the period of 90 days. The 0.2 l of the prepared 10 wt. % vesicle suspension in fresh water with pH = 6.5 and 0.2 l of water suspension of hydrogel microparticles was mixed with 2 liters of the suspension liquid and stirred manually for 5 minutes. Then, the mixture was diluted with fresh water in the 1:100 volume ratio. Fifty one-liter pots were filled with soil and seeded with 5 *Zea mays* seeds each. The pots were divided into 5 groups. The first group contained only soil and the second group contained soil and urea fertilizer with the urea amount corresponding to the common dose of 130 kg/ha. The third group contained soil, the urea amount corresponding to the common dose of 130 kg/ha and the soil was sprayed with the diluted soil amendment corresponding the 250 l/ha dose of soil amendment immediately after seeding. The fourth group contained soil, the urea amount corresponding to the common dose of 130 kg/ha and was sprayed with the diluted soil amendment corresponding the 250 l/ha dose of soil amendment immediately after seeding and the second application corresponding the 250 l/ha dose of the soil amendment diluted in the 1:200 ratio was applied on the maize with 5 leaves. The fifth group contained soil, the urea amount corresponding to the common dose of 130 kg/ha and was sprayed with the diluted soil amendment corresponding the 250 l/ha dose of soil amendment immediately after seeding, the second application corresponding the 250 l/ha dose of the soil amendment diluted in the 1:200 ratio was applied on the maize with 5 leaves and the third application corresponding the 250 l/ha dose of the soil amendment diluted in the 1:200 ratio was applied on the maize with 8 leaves. The germination rate was determined subjectively as the time for the appearance of the first green leaf above the ground of at least 3 seeds per pot.

**Table 8.1 Result of the tests shown in % relative to the reference Group 1, hence, the results for Group 1 are always equal to 100%.**

| | **Group 1** | | **Group 2** | | **Group 3** | | **Group 4** | | **Group 5** | |
|---|---|---|---|---|---|---|---|---|---|---|
| | **normal** | **dry** | **normal** | **dry** | **normal** | **dry** | **normal** | **dry** | **normal** | **dry** |
| **Dry mass** | 100 | 100 | 148 | 130 | 158 | 140 | 169 | 151 | 184 | 171 |
| **Root size** | 100 | 100 | 140 | 135 | 158 | 150 | 186 | 163 | 205 | 170 |
| **Vitality index** | 100 | 100 | 118 | 112 | 120 | 125 | 128 | 144 | 131 | 155 |
| **Chlorophyll content** | 100 | 100 | 155 | 150 | 163 | 170 | 180 | 190 | 185 | 200 |
| **Germination rate** | 100 | 100 | 121 | 94 | 134 | 116 | 134 | 116 | 134 | 116 |

Amount of dry mass, root size, vitality index and photosynthesis effecacy were measured under standard amount of irrigation water and under "dry" conditions (30 % of the standard amount of the irrigation water) and temperature profile corresponding the average Central European climate pattern for the April-June period. Data obtained for the groups 2-5 were related to the date from the reference group 1 as an average of 5 indipendent measurements. Results are shown in the Table for both standard amount of water and for the dry conditions. Soil microbial populations, determined by soil phospholipid fatty acid (PLFA) analysis, found that the treatments applied did not cause a shift in microbial populations between fungi and bacteria, or gram-positive and gram-negative bacteria and elevated all soil microbial populations tested at the end of the experiment, indicating a desirable improvement in soil health. Soil microbial populations, determined by soil phospholipid fatty acid (PLFA) analysis, found that the treatments caused no shift in microbial populations between fungi and bacteria, or gram-positive and gram-negative bacteria and elevated all soil microbial populations tested at the end of the experiment, indicating a desirable improvement in soil health.

### Example 9:

A liquid soil ammendment was prepared for small footage (10 m x 10 m) field experiment with barley (*Hordeum vulgare L.*)*.* Effect of the controlled release of biostimulants on the vitality, root size, amount of nitrogen and saccharides in the harvested grain was investigated. The suspension liquid was produced by blending 3.5 liters of fresh water, 2.3 liters of lactic acid, 1.1 liters of glycerol, 1.05 liters of 25 % water solution of amonia, 1.1 liters of glycerol monolaurate (C₁₅H₃₀O₄) with acidifier, 1.1 liters of vermi compost leachete and 0.3 liters of *Ascophyllum nodosum* extract. The pH of the suspension liquid was adjusted to 6.2.

The effects of the soil amendment containing equal amounts of four compartment vesicles and hydrogel microparticles in the suspension liquid were investigated in the experiments utilizing barley (*Hordeum vulgare L.*)*.* Using capillary microfluidic device, monodisperse multicompartment vesicles were prepared from templates of double-emulsion drops encapsulated in the innermost drops of a second level of double-emulsion drops using another microfluidic device. Microfluidic device employing injection capillary with four bores produced double-emulsion drops containing four different inner water drops. The hydrophobically modified chitosan outer vesicle membranes were prepared from chitosan grafted with C₁₈ side chains with the grafting density of approximately 82 %. The chitosan grafted with C₁₂ side chains was used for the inner compartments membranes. The inner membrane of the four compartment vesicles bursts before the outer membrane does, the NResponse (AgroLiquid, USA) liquid urea nitrogen fertilizer (24-0-0, 1 % combined S) encapsulated in the outer compartment is mixed with the Fe in the EDTA chelate contained in two of the inner compartments and with the Mg and S encapsulated in another two inner compartments. This enables transport of plant nutrients and microelements to the soil profile containing maize seeds and pre-program the time for releasing the mixture for use by seedlings roots.

The 0.2 1 of the prepared 10 wt. % vesicle suspension in fresh water with pH = 5.8 and 0.2 1 of water suspension of hydrogel microparticles was mixed with 2 liters of the suspension liquid and stirred manually for 5 minutes. Then, the mixture was diluted with fresh water in the 1:100 volume ratio. Five small footage 10 m x 10 m test fields were prepared for seeding utilizing the common preparation protocol. In the fhe first field, no fertilizer or soil additive was used. Four of the remaining fields were treated with the standard fertilizer dose used by the farms in the area equal to 1.3 kg/100 m² of an N-P-K fertilizer (YARA) in the fall and 0.7 kg/100 m² of the NP fertilizer (Amofos) in the spring before seeding. In the second field, no additional treatment was applied. The third field was prepared in the same way as the field 2 and, in addition, the soil was sprayed with the soil amendment diluted with fresh water in the 1:100 volume ratio and dose of 2.50 l/100 m² immediately after seeding. The fourth field was prepared and treated the same way as the field 3 with an additional application of 2.50 l/100 m² of the soil amendment diluted in the 1:200 ratio applied on the first emerged barley shoots. The fifth field was prepared and treated the same way as the field 4 and an additional treatment of 2.50 l/100 m² of the soil amendment diluted in the 1:200 ratio applied on the barley before the appearance of the 5th leaf. The germination rate was determined subjectively as the time for the appearance of the first green leaf above the ground of at least ¾ of the field area. Quality of the barely grains (content of N and saccharides) was measured using the standardized test protocol used by malt houses in the area Czech National Standard (ČSN 46 1100-5).

**Table 9.1 Result of the tests shown in % relative to the reference Field 1, hence, the results for Field 1 are always equal to 100 %.**

| | **Field 1** | **Field 2** | **Field 3** | **Field 4** | **Field 5** |
|---|---|---|---|---|---|
| **Harvested grain** | 100 | 136 | 147 | 153 | 156 |
| **N** | 100 | 114 | 102 | 100 | 103 |
| **saccharides** | 100 | 138 | 151 | 158 | 165 |
| **Root size** | 100 | 135 | 145 | 186 | 201 |
| **Germination rate** | 100 | 121 | 147 | 147 | 147 |

Amount of harvested grain, root size, content of saccharides and germination effecacy were measured in the time of harvest in mid-July. Data obtained for the fields 2-5 were related to the date from the reference field 1 as an average of 5 indipendent measurements. Results are shown in the Table 9.1. Soil microbial populations, determined by soil phospholipid fatty acid (PLFA) analysis, found that the treatments applied did not cause a shift in microbial populations between fungi and bacteria, or gram-positive and gram-negative bacteria and elevated all soil microbial populations tested at the end of the experiment, indicating a desirable improvement in soil health.

## Claims

1. Soil amendment comprising a suspension liquid comprising water, at least one hygroscopic component, at least one non-ionic surfactant, at least one water soluble germination accelerator, and optionally at least one organic soil fertilizer; the soil amendment further comprising at least one type of substance carrier containing at least one nutrient and/or bioactive component.

2. Soil amendment according to claim 1, wherein the suspension liquid comprises 2-5 parts of water, 2-5 parts of hygroscopic component(s), 0.5-3 parts of non-ionic surfactant(s), 0.1-2 parts of germination accelerator, and optionally 0.1-2 parts of at least one organic soil fertilizer.

3. Soil amendment according to claim 1 or 2, wherein the suspension liquid comprises lactic acid and glycerol as hygroscopic components, and vermicompost leachate as germination accellerator.

4. Soil amendment according to any one of the preceding claims, wherein the suspension liquid contains water, hygroscopic components, ammonia, non-ionic surfactants, vermi compost leachate, humic acids and/or liquid seaweed extract.

5. Soil amendment according to any one of claims 1 to 4, wherein the substance carrier is an inorganic substance carrier, preferably selected from zeolites, carboneous particles, halloysite nanotubes.

6. Soil amendment according to any one of claims 1 to 4, wherein the substance carrier is an organic substance carrier, preferably selected from natural polymers polysaccharides and/or polysaccharide derivatives, polysaccharides hydrophobized by C10-C20 alkyl chains, cross-linked polysaccharides, proteins, cross-linked proteins, superabsorbent polymers such as potassium polyacrylate, amphiphilic molecules, block copolymers such as PLA/PEG block copolymers, and combinations of these materials.

7. Soil amendment according to any one of claims 1 to 6, wherein the substance carrier is selected from microgel particles, multicompartment microparticles, vesicles, bi-layer and multi-layer vesicles with single or multiple inner compartments, niosomes, phytosomes, layered inorganic or organic microparticles, hydrogel or aerogel microparticles, grafted, branched, dendrimer or star shaped macromolecules.

8. Soil amendment according to claim 6 or 7, wherein
- polysaccharides and/or polysaccharide derivatives comprise starch, starch derivatives, chitin, chitosan, chitosan benzoate, cellulose, cellulose derivatives, carrageenan, alginate, gum karaya and arabic gum;
- protein is selected from collagen, denaturated collagen, gelatine, elastin, fibrin, gluten, wheat and soy proteins.

9. Soil amendment according to claim 6 or 7, wherein the block copolymer is poly(lactic acid)/poly(ethylene glycol) block copolymer end-capped with itaconic acid, preferably cross-linked by blue light of wavelength of 430-490 nm.

10. Soil amendment according to any one of the preceding claims, wherein the nutrients and/or bioactive components include plant and soil nutrients, microelements, germination accellerators, and/or protective agents such as pesticides, herbicides, miticides.

11. Soil amendment according to any one of the preceding claims, wherein the nutrients and/or bioactive components include
- vermi-compost extracts (vermicompost leachates),
- urea, potassium nitrate, humate complex, humic acids, EDTA chelates of metals selected from Mg, Mn, Fe, Cr, Zn;
- kelp, kelp extract, seaweed extract, kelp paste, kelp powder, Ascophyllum nodosum extract.

12. Method for enhancing yield and/or nutrition quality of green mass of plants, enlarging root system, improving nutrients uptake, and/or improving water management, comprising the step of applying the soil amendment according to any one of the preceding claims on soil and/or plants and/or seeds.

13. The method according to claim 12, wherein the soil amendment is applied by casting or spraying.

14. Method for accelerating germination, comprising the step of applying the soil amendment according to any one of claims 1-11 on seeds, preferably by soaking.

15. Use of the soil amendment according to any one of claims 1-11 in agriculture, horticulture, turf and grass maintenance, gardening, orchards and forestry.
